# EUROPEAN PATENT APPLICATION

(11) **EP 3 392 317 A1**
(43) Date of publication of application: **24.10.2018**
(21) Application number: 16876053.6
(22) Date of filing: 15.12.2016
(51) Int. Cl.: C09D 7/12, H01B 3/10, H01B 3/02, C09D 1/00

(54) **INSULATION COATING COMPOSITION FOR GRAIN-ORIENTED ELECTRICAL STEEL SHEET, METHOD FOR FORMING INSULATION COATING OF GRAIN-ORIENTED ELECTRICAL STEEL SHEET, AND GRAIN-ORIENTED ELECTRICAL STEEL SHEET HAVING INSULATION COATING FORMED THEREON**

(30) Priority: 18.12.2015 KR 20150182064
(71) Applicant: POSCO, Pohang-si, Gyeongsangbuk-do 37859 (KR)
(72) Inventor: KWON, Min Serk, Pohang-si Gyeongsangbuk-do 37859 (KR); SHIM, Ho Kyung, Pohang-si Gyeongsangbuk-do 37859 (KR); CHOI, Heon Jo, Pohang-si Gyeongsangbuk-do 37859 (KR); NO, Tae Young, Pohang-si Gyeongsangbuk-do 37859 (KR)
(74) Representative: Zech, Stefan Markus
(86) International application number: PCT/KR2016/014742
(87) International publication number: WO 2017/105111

(57) **Abstract**

The present invention relates to an insulation coating composition for a grain-oriented electrical steel sheet, a method for forming an insulation coating of a grain-oriented electrical steel sheet, and a grain-oriented electrical steel sheet having an insulation coating formed thereon. Specifically, the present invention can provide: an insulation coating composition for a grain-oriented electrical steel sheet, the composition comprising 0.1-10 wt% of an inorganic nitride, 30-60 wt% of colloidal silica, and 30-60 wt% of a metal phosphate; a method for forming an insulation coating of a grain-oriented electrical steel sheet using the same, and a grain-oriented electrical steel sheet having an insulation coating formed thereon.

## Description

### [Technical Field]

The present invention relates to an insulation coating composition for a grain-oriented electrical steel sheet, a method for forming an insulation coating for a grain-oriented electrical steel sheet, and a grain-oriented electrical steel sheet having an insulation coating formed thereon.

### [Background Art]

Generally, a grain-oriented electrical steel sheet refers to an electrical steel sheet having a structure of a crystalline orientation aligned in the 110 [001] directions and has excellent magnetic properties in the rolling direction, thus widely used as core materials for transformers, motors, power generators and other electronic devices, and the like.

Generally, the surface of this grain-oriented electrical steel sheet is formed with an insulation coating in order to minimize the power loss thereof, in which case the insulation coating should have a high electrical insulation, an excellent adhesion with a material, and a uniform color without defects in appearance.

In recent years, stricter international standards for transformer noise have been adopted and competition intensified in the related industry, which inevitably gave rise to demand for lower noise of insulation coating, and accordingly, it is necessary to study the magnetostrictive phenomenon of the grain-oriented electrical steel sheet.

Specifically, when a magnetic field is coated to an electrical steel sheet used as a transformer iron core, repeating shrinkage and expansion induce shaking, which causes vibration and noise in the transformer.

In order to reduce such magnetostriction phenomenon, a method of reducing a 90° magnetic domain of a grain-oriented electrical steel sheet is generally used. The '90° magnetic domain' above refers to a region having magnetization oriented at right angles to the magnetic field application direction, and the smaller amount of the 90° magnetic domain causes less magnetostriction.

In this regard, research has been actively carried out on the composition for use in forming insulation coatings of grain-oriented electrical steel sheets; however, there is still a limit to satisfy the noise level required for advanced grain-oriented electrical steel sheets.

### [DISCLOSURE]

### [Technical Problem]

An exemplary embodiment of the present invention provides an insulation coating composition for a grain-oriented electrical steel sheet including 0.1 to 10 wt% of an inorganic nitride; 30 to 60 wt% of colloidal silica; and 30 to 60 wt% of a metal phosphate.

Another embodiment of the present invention provides a method for forming an insulation coating for a grain-oriented electrical steel sheet using the insulation coating composition for a grain-oriented electrical steel sheet.

Yet another embodiment of the present invention provides a grain-oriented electrical steel sheet having an insulation coating formed on a surface thereof, using the insulation coating composition for a grain-oriented electrical steel sheet.

### [Technical Solution]

### Insulation coating composition for a grain-oriented electrical steel sheet

In one embodiment of the present invention, an insulation coating composition for a grain-oriented electrical steel sheet is provided, in which the composition comprises 0.1 to 10 wt% of an inorganic nitride, 30 to 60 wt% of colloidal silica, and 30 to 60 wt% of a metal phosphate.

Specifically, the inorganic nitride may include a nitride of at least one element selected from the group consisting of magnesium (Mg), silicon (Si), aluminum (Al), titanium (Ti), boron (B), tantalum (Ta), gallium (Ga), calcium (Ca), indium (In), zirconium (Zr), germanium (Ge), niobium (Nb), strontium (Sr₂), and barium (Ba).

The particle diameter of the colloidal silica may be 2 to 100 nm.

The metal phosphate may include a metal phosphate of at least one element selected from the group consisting of aluminum (Al), magnesium (Mg), calcium (Ca), antimony (Sb), tin (Sn), lead (Pb), and bismuth (Bi).

Meanwhile, the insulation coating composition for a grain-oriented electrical steel sheet may further include 0.1 to 7 wt% of a chromium oxide based on 100 wt% of the composition that includes 0.1 to 10 wt% of an inorganic nitride; 30 to 60 wt% of colloidal silica; and 30 to 60 wt% of a metal phosphate.

Independently of the above, the composition may further include 0.1 to 4 wt% of boric acid.

### Method for forming insulation coating of grain-oriented electrical steel sheet

In another embodiment of the present invention, a method for forming an insulation coating for a grain-oriented electrical steel sheet is provided, which may include steps of: preparing an insulation coating composition for a grain-oriented electrical steel sheet; coating the insulation coating composition for a grain-oriented electrical steel sheet on a surface of the grain-oriented electrical steel sheet; and heat treating the grain-oriented electrical steel sheet coated with the insulation coating composition for a grain-oriented electrical steel sheet, in which the grain-oriented electrical steel sheet contains 2.5 to 4.5 wt% of silicon (Si) and 0.01 to 0.08 wt% of antimony (Sb), and includes 0.02 to 0.08 wt% of tin (Sn), 0.01 to 0.04 wt% of bismuth (Bi), 0.01 to 0.30 wt% of chromium (Cr), 0.02 to 0.04 wt% of acid soluble aluminum (Al), 0.05 to 0.20 wt% of manganese (Mn), 0.02 to 0.08 wt% of carbon (C), and 0.001 to 0.005 wt% of sulfur (S), and includes 10 to 50 ppm of nitrogen (N), and the remainder being Fe and other inevitable impurities, in which the insulation coating composition for a grain-oriented electrical steel sheet includes 0.1 to 10 wt% of an inorganic nitride, 30 to 60 wt% of colloidal silica, and 30 to 60 wt% of a metal phosphate.

Specifically, the step of heat treating the grain-oriented electrical steel sheet coated with the insulation coating composition for a grain-oriented electrical steel sheet may include a step of converting the inorganic nitride in the insulation coating composition for a grain-oriented electrical steel sheet into an inorganic oxide or a hydroxide.

The step of converting the inorganic nitride in the insulation coating composition for a grain-oriented electrical steel sheet into an inorganic oxide or a hydroxide may include generating of a gas.

More specifically, the insulation coating may be formed with pores formed therein by the gas.

In an example, based on the total volume (100 vol%) of the insulation coating, 0.05 to 10 vol% of the pore may be included.

Meanwhile, the step of heat treating the grain-oriented electrical steel sheet coated with the insulation coating composition for a grain-oriented electrical steel sheet may be performed in a temperature range of 250 to 950 □.

The step of heat treating the grain-oriented electrical steel sheet coated with the insulation coating composition for a grain-oriented electrical steel sheet may be performed for 30 to 70 seconds.

The step of coating the insulation coating composition for a grain-oriented electrical steel sheet on the surface of the grain-oriented electrical steel sheet may include coating the insulation coating composition for a grain-oriented electrical steel sheet in a range of 1 to 7 g/m² on the surface of each side of the grain-oriented electrical steel sheet.

Meanwhile, the inorganic nitride may include a nitride of at least one element selected from the group consisting of magnesium (Mg), silicon (Si), aluminum (Al), titanium (Ti), boron (B), tantalum (Ta), gallium (Ga), calcium (Ca), indium (In), zirconium (Zr), germanium (Ge), niobium (Nb), strontium (Sr₂), and barium (Ba).

### Grain-oriented electrical steel sheet having an insulation coating formed thereon

In yet another embodiment of the present invention, a grain-oriented electrical steel sheet having an insulation coating formed thereon is provided, which includes a grain-oriented electrical steel sheet and an insulation coating positioned on the surface of the grain-oriented electrical steel sheet, in which the grain-oriented electrical steel sheet contains 2.5 to 4.5 wt% of silicon (Si) and 0.01 to 0.08 wt% of antimony (Sb), and includes 0.02 to 0.08 wt% of tin (Sn), 0.01 to 0.04 wt% of bismuth (Bi), 0.01 to 0.30 wt% of chromium (Cr), 0.02 to 0.04 wt% of acid soluble aluminum (Al), 0.05 to 0.20 wt% of manganese (Mn), 0.02 to 0.08 wt% of carbon (C), and 0.001 to 0.005 wt% of sulfur (S), and includes 10 to 50 ppm of nitrogen (N), and the remainder being Fe and other inevitable impurities, and in which the insulation coating includes 0.1 to 10 wt% of an inorganic nitride, 30 to 60 wt% of silica, and 30 to 60 wt% of a metal phosphate.

Specifically, the insulation coating may include a pore therein.

More specifically, based on the total volume (100 vol%) of the insulation coating, 0.05 to 10 vol% of the pore may be included.

The diameter of the pore may be 1 to 500 nm.

Meanwhile, the inorganic oxide or hydroxide may include an oxide or a hydroxide of at least one element selected from the group consisting of magnesium (Mg), silicon (Si), aluminum (Al), titanium (Ti), boron (B), tantalum (Ta), gallium (Ga), calcium (Ca), indium (In), zirconium (Zr), germanium (Ge), niobium (Nb), strontium (Sr₂), and barium (Ba).

The thickness of the insulation coating may be 0.2 to 4.0 *µ*m.

### [Advantageous Effects]

The embodiments of the present invention may provide an insulation coating composition for a grain-oriented electrical steel sheet, which contributes to securing excellent insulation and adhesion while reducing noise due to magnetostriction, and a method for forming an insulation coating for a grain-oriented electrical steel sheet using the same, and a grain-oriented electrical steel sheet having the insulation coating formed thereon.

### [Description of the Drawings]

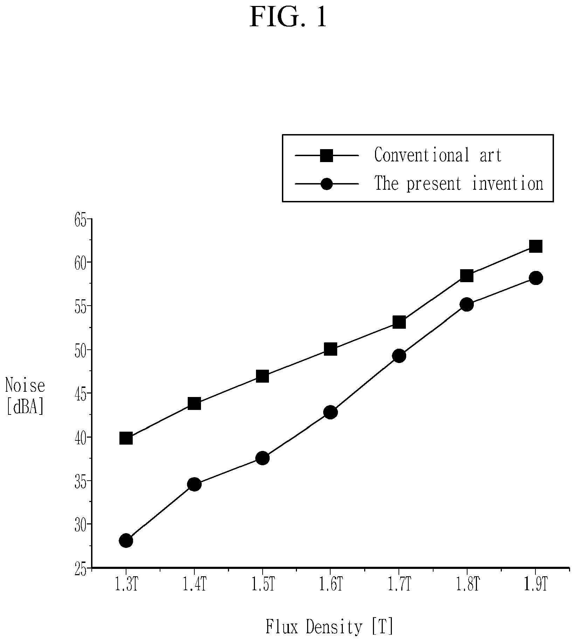

FIG. 1 shows a noise comparison of a 250 kVA transformer according to Inventive Example A3 and Comparative Example A0 of the present invention.

### [Mode for Invention]

Hereinafter, the embodiments of the present invention will be described in detail. Meanwhile, it should be understood that the embodiments described herein are merely some examples of the present invention, and accordingly, these are not intended to be limiting and to be defined only by the scope of the claims appended hereto.

### Insulation coating composition for a grain-oriented electrical steel sheet

One embodiment of the present invention provides an insulation coating composition for a grain-oriented electrical steel sheet, comprising: 0.1 to 10 wt% of an inorganic nitride; 30 to 60 wt% of colloidal silica; and 30 to 60 wt% of a metal phosphate.

This is a composition that can be used for the purpose of forming an insulation coating on a surface of a grain-oriented electrical steel sheet, in which the insulation coating formed thereby has an excellent effect of attenuating the magnetostrictive vibrations.

Specifically, the magnetostrictive vibrations are believed to be a major cause of noise of the grain-oriented electrical steel sheet. In this regard, as one of the methods for improving the noise characteristic of a grain-oriented electrical steel sheet, a method of reducing a 90° magnetic domain by imparting a tensile stress to the steel sheet is known.

However, the conventional wet coating will not have sufficient effect of noise improvement by the method of imparting tensile stress, and the condition that the steel sheet should be coated to a thickness of a thick film can result in a problem of deteriorated transformer space factor and efficiency. In addition, while the coating by way of vacuum deposition of the physical vapor deposition (PVD) and chemical vapor deposition (CVD) can provide high tension, the method is not only difficult to commercialize, but also has a problem of inferior insulation.

Meanwhile, an insulation coating composition for a grain-oriented electrical steel sheet provided according to one embodiment of the present invention can overcome the problems mentioned above by including an inorganic nitrogen, colloidal silica, and a metal phosphate.

In particular, since the inorganic nitride, which is decomposed by heat treatment to form fine pores within the insulation coating, contributes greatly to improvement of the noise characteristic of the grain-oriented electrical steel sheet, and also has excellent miscibility with the colloidal silica and the metal phosphate, the inorganic nitride can solve the problems of not only the noise generated due to the magnetostriction but also the deteriorated compatibility of the coating.

Hereinafter, the reason for the presence of each of the components in the insulation coating composition for a grain-oriented electrical steel sheet will be described in detail.

First, after being coated to the surface of the steel sheet in the form of the composition described above, the inorganic nitride is decomposed in the process of heat treatment to generate gas, forming fine pores within the insulation coating.

Specifically, the inorganic nitride may include a nitride of at least one element selected from the group consisting of magnesium (Mg), silicon (Si), aluminum (Al), titanium (Ti), boron (B), tantalum (Ta), gallium (Ga), calcium (Ca), indium (In), zirconium (Zr), germanium (Ge), niobium (Nb), strontium (Sr₂), and barium (Ba).

In this regard, the following chemical formulas 1 to 6 illustrate the decomposition reaction according to the type of the inorganic nitride.
[Chemical reaction formula 1] M-N + 2H₂O → M-OH + NH₃↑(M = Ti, Ta, Ca, In, Zr, Nb, Al)
[Chemical reaction formula 2] Mg₃N₂ + H₂O → 3Mg(OH)₂ + 2NH₃↑
[Chemical reaction formula 3] Ca₃N₂ + H₂O → 3Ca(OH)₂ + 2NH₃↑
[Chemical reaction formula 4] Sr₃N₂ + H₂O → 3Sr(OH)₂ + 2NH₃↑
[Chemical reaction formula 4] Ba₃N₂ + H₂O → 3Ba(OH)₂ + 2NH₃↑
[Chemical reaction formula 5] Si₃N₄ → 3SiO₂ + 4NH₃↑
[Chemical reaction formula 6] Ge₃N₄ → 3GeO₂ + 4NH₃↑
[Chemical reaction formula 7] 2NH₃↑→ N₂↑ + 3H₂↑

As represented by Chemical reaction formulas 1 to 6 above, the inorganic nitride generates ammonia (NH₃). In addition, ammonia (NH₃) generated according to each of the Chemical reaction formulas is decomposed into nitrogen (N₂) and hydrogen (H₂) gas as represented by Chemical reaction formula 7.

Referring to above, it is understood that the inorganic nitride decomposes to generate various gases, and at the same time, it may be converted into inorganic oxide or hydroxide to form fine pores within the insulation coating.

As described above, since the fine pores formed within the insulation coating convert the magnetostrictive energy into thermal energy to thus suppress the vibration amplification, the noise of the grain-oriented electrical steel sheet is improved effectively.

In addition, the superior miscibility of the colloidal silica and the metal phosphate is advantageous for mass production.

Meanwhile, the colloidal silica plays a role of imparting tension to the insulation coating and the metal phosphate plays a role of imparting an adhesion to the interface between the steel sheet and the insulation coating and therefore the materials also need to be contained in the composition.

The reason for limiting the content of the inorganic nitride, the colloidal silica, and the metal phosphate in the insulation coating composition for a grain-oriented electrical steel sheet will be described below.

When the content of the inorganic nitride in the insulation coating composition for a grain-oriented electrical steel sheet is as low as less than 0.1 wt%, pores formed in the insulation coating will be insufficient, which may result in the deteriorated noise characteristic of attenuating the magnetostrictive vibration. On the contrary, when the content is above 10 wt%, this can generate an excessive amount of gas to an extent that the insulation coating peels off in the heat treatment process, subsequently resulting in increased surface roughness.

Further, when the content of the metal phosphate in the insulation coating composition for a grain-oriented electrical steel sheet is less than 30 wt%, the adhesion of the composition may be deteriorated, thus resulting in deteriorated tension and adhesion of the insulation coating. On the contrary, when the content is above 60 wt%, this may result in deteriorated insulation.

In addition, when the content of the colloidal silica is less than 30 wt%, the film tension of the composition may be deteriorated, resulting in deteriorated rate of core loss improvement. On the contrary, when the content is above 60 wt%, the adhesion after coating of the composition to the grain-oriented electrical steel sheet and heat treatment thereof may be deteriorated.

Considering these problems, the insulation coating composition for a grain-oriented electrical steel sheet is limited to comprise: 0.1 to 10 wt% of an inorganic nitride; 30 to 60 wt% of colloidal silica; and 30 to 60 wt% of a metal phosphate.

Meanwhile, the particle diameter of the colloidal silica may be 2 to 100 nm. The particle diameter of the colloidal silica is limited to the range mentioned above, because when the particle diameter of the colloidal silica is less than 2 nm, the specific surface area is increased and the stability of the composition is reduced, resulting in a problem that the mass production is difficult, and when the particle diameter is above 100 nm, the surface roughness becomes coarse and surface defects may occur.

Specifically, the colloidal silica may be composed of nanoparticles having a particle diameter of no less than 2 nm and no more than 50 nm, and may be composed of two or more types of colloidal silica having different average particle diameters from each other.

The metal phosphate may include a metal phosphate of at least one element selected from the group consisting of aluminum (Al), magnesium (Mg), calcium (Ca), antimony (Sb), tin (Sn), lead (Pb), and bismuth (Bi). Specifically, the metal phosphate may be an aluminum phosphate monobasic, magnesium phosphate monobasic or calcium phosphate monobasic, or a mixture of at least two of these.

More specifically, the metal phosphate is composed of a compound formed by a chemical reaction between metal hydroxide and phosphoric acid(H₃PO₄), and the metal hydroxide may be at least one selected from the group consisting of Ba(OH)₂, Co(OH)₂, Ni(OH)₂, Al(OH)₃, Mg(OH)₂, Zn(OH)₂, 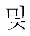 Ca(OH)₂.

Specifically, the metal atom of the metal hydroxide may be formed by a single bond, a double bond, or a triple bond formed by a substitution reaction with phosphorous of phosphoric acid, with the unreacted free phosphoric acid (H₃PO₄) being in an amount of 35 % or less.

The metal phosphate is composed of a compound formed by a chemical reaction between metal hydroxide and phosphoric acid (H₃PO₄), and the weight ratio of the metal hydroxide to the phosphoric acid may be expressed as 1:100 to 70:100.

The content of the metal hydroxide is limited to the range mentioned above, because when the metal hydroxide is included in an excess amount exceeding the weight ratio of 70:100, the chemical reaction may not be completed and a problem of precipitate formation can occur, and when the metal hydroxide is included in a small amount of less than the weight ratio of 1:100, there may be a problem of inferior corrosion resistance.

The insulation coating composition for a grain-oriented electrical steel sheet may further include a chromium oxide. Specifically, the composition (i.e., the composition comprising 0.1 to 10 wt% of an inorganic nitride; 30 to 60 wt% of colloidal silica; and 30 to 60 wt% of a metal phosphate) may further include 0.1 to 7 wt% of a chromium oxide based on 100 wt% of the composition, and in this range, the composition can exhibit corrosion resistance.

Meanwhile, when the amount of chromium oxide is above 7 wt%, stability of the composition may not be secured due to an increase in the viscosity, and less than 0.1 wt% of chromium oxide is an insufficient amount for the composition to exhibit corrosion resistance.

Independently from above, the insulation coating composition for a grain-oriented electrical steel sheet may further include boric acid. Specifically, the composition (i.e., the composition comprising 0.1 to 10 wt% of an inorganic nitride; 30 to 60 wt% of colloidal silica; and 30 to 60 wt% of a metal phosphate) may further include 0.1 to 4 wt% of a boric acid based on 100 wt% of the composition, and in this range, the coating formed by the composition can exhibit improved adhesion.

However, when in an amount exceeding 4 wt%, the boric acid may react with metal phosphate in the composition, producing a precipitate. On the contrary, when the composition is in an amount less than 0.1 wt%, as the composition is coated to a grain-oriented electrical steel sheet and subjected to heat treatment, there is a problem that crack occurs on the insulation coating, resulting in deteriorated adhesion.

### Method for forming insulation coating for a grain-oriented electrical steel sheet

In another embodiment of the present invention, a method for forming an insulation coating for a grain-oriented electrical steel sheet is provided, which may include steps of: preparing an insulation coating composition for a grain-oriented electrical steel sheet; coating the insulation coating composition for a grain-oriented electrical steel sheet on a surface of the grain-oriented electrical steel sheet; and heat treating the grain-oriented electrical steel sheet coated with the insulation coating composition for a grain-oriented electrical steel sheet, in which the grain-oriented electrical steel sheet contains 2.5 to 4.5 wt% of silicon (Si) and 0.01 to 0.08 wt% of antimony (Sb), and includes 0.02 to 0.08 wt% of tin (Sn), 0.01 to 0.04 wt% of bismuth (Bi), 0.01 to 0.30 wt% of chromium (Cr), 0.02 to 0.04 wt% of acid soluble aluminum (Al), 0.05 to 0.20 wt% of manganese (Mn), 0.02 to 0.08 wt% of carbon (C), and 0.001 to 0.005 wt% of sulfur (S), and includes 10 to 50 ppm of nitrogen (N), and the remainder being Fe and other inevitable impurities, in which the insulation coating composition for a grain-oriented electrical steel sheet includes 0.1 to 10 wt% of an inorganic nitride, 30 to 60 wt% of colloidal silica, and 30 to 60 wt% of a metal phosphate.

The method corresponds to a method for forming an insulation coating on a surface of a grain-oriented electrical steel sheet using an insulation coating composition for a grain-oriented electrical steel sheet of the same composition as that described above.

That is, the step of preparing the insulation coating composition for a grain-oriented electrical steel sheet corresponds to the step of preparing the composition that satisfies the same composition described above. Accordingly, this step will not be redundantly explained below, while the embodiment will be described in detail with reference to respective steps.

First, the step of coating the insulation coating composition for a grain-oriented electrical steel sheet on the surface of the grain-oriented electrical steel sheet may include coating the insulation coating composition for a grain-oriented electrical steel sheet in a range of 1 to 7 g/m² on the surface of each side of the grain-oriented electrical steel sheet.

It is to be noted that, when the insulation coating composition is in an amount above 7 g/m², the transformer space factor can be deteriorated, resulting in a problem of deteriorated characteristic of the transformer when it is made with the finally obtained grain-oriented electrical steel sheet. On the contrary, when the insulation coating composition is coated in a small amount less than 1 g/m², there is a problem that the insulation coating exhibits inferior insulation.

Meanwhile, the step of heat treating the grain-oriented electrical steel sheet coated with the insulation coating composition for a grain-oriented electrical steel sheet includes forming an insulation coating on the surface of the grain-oriented electrical steel sheet by drying the insulation coating composition for a grain-oriented electrical steel by the heat treatment,.

Specifically, the step of heat treating the grain-oriented electrical steel sheet coated with the insulation coating composition for a grain-oriented electrical steel sheet may include a step of converting the inorganic nitride in the insulation coating composition for a grain-oriented electrical steel sheet into an inorganic oxide or a hydroxide.

More specifically, the inorganic nitride may include a nitride of at least one element selected from the group consisting of magnesium (Mg), silicon (Si), aluminum (Al), titanium (Ti), boron (B), tantalum (Ta), gallium (Ga), calcium (Ca), indium (In), zirconium (Zr), germanium (Ge), niobium (Nb), strontium (Sr₂), and barium (Ba), as mentioned above.

In the reaction expressed by Chemical reaction formulas 1 to 6 exemplified above, the inorganic nitride decomposed by heat treatment is converted into oxide or hydroxide of at least one element selected from the group consisting of magnesium (Mg), silicon (Si), aluminum (Al), titanium (Ti), boron (B), tantalum (Ta), gallium (Ga), calcium (Ca), indium (In), zirconium (Zr), germanium (Ge), niobium (Nb), strontium (Sr₂), and barium (Ba), while also generating barium (NH₃), nitrogen (N₂) and/or hydrogen (H₂) gas according to the corresponding element, thus forming fine pores within the insulation coating.

That is, the step of converting the inorganic nitride in the insulation coating composition for a grain-oriented electrical steel sheet into an inorganic oxide or a hydroxide may include generating of a gas, and forming of an insulation coating that has pores formed therein by the gas.

Specifically, the diameter of the pores may be 1 to 500 nm. When the diameter of the pores is less than 1 nm, the noise effect is insignificant and when the diameter of the pores is above 500 nm, the adhesion is lowered.

Further, based on the total volume (100 vol%) of the insulation coating, 0.05 to 10 vol% of the pores may be included. When the pores are less than 0.05 vol%, the noise effect is insignificant and when the pores are above 10 vol%, the adhesion is lowered.

The step of heat treating the grain-oriented electrical steel sheet coated with the insulation coating composition for a grain-oriented electrical steel sheet may be performed in a temperature range of 250 to 950 □. It is to be noted that, drying at a temperature above 950 °C can leave uneven pattern defect that is observable on the insulation coating, while the drying at a temperature below 250 °C causes a problem of insufficient drying and difficulty to ensure the intended properties of the insulation coating.

The step of heat treating the grain-oriented electrical steel sheet coated with the insulation coating composition for a grain-oriented electrical steel sheet may be performed for 30 to 70 seconds.

Meanwhile, the colloidal silica in the insulation coating composition for a grain-oriented electrical steel sheet is converted into non-colloidal silica upon heat treatment, and the inorganic oxide or hydroxide may be converted into inorganic oxide.

Meanwhile, the grain-oriented electrical steel sheet contains 2.5 to 4.5 wt% of silicon (Si) and 0.01 to 0.08 wt% of antimony (Sb), and includes 0.02 to 0.08 wt% of tin (Sn), 0.01 to 0.04 wt% of bismuth (Bi), 0.01 to 0.30 wt% of chromium (Cr), 0.02 to 0.04 wt% of acid soluble aluminum (Al), 0.05 to 0.20 wt% of manganese (Mn), 0.02 to 0.08 wt% of carbon (C), and 0.001 to 0.005 wt% of sulfur (S), and includes 10 to 50 ppm of nitrogen (N), with the remainder being Fe and other inevitable impurities, and the insulation coating composition for a grain-oriented electrical steel sheet includes 0.1 to 10 wt% of an inorganic nitride, 30 to 60 wt% of colloidal silica, and 30 to 60 wt% of a metal phosphate, and may be prepared by a method commonly known in the art.

Specifically, the grain-oriented electrical steel sheet may be prepared by steps of: preparing a steel slab having the same composition as the grain-oriented electrical steel sheet described above; hot rolling the steel slab to produce a hot rolled plate; cold rolling the hot rolled plate to produce a cold rolled plate; decarburized annealing the cold rolled sheet; and coating an annealing separator on the surface of the decarburized annealed steel sheet and finally annealing the same.

More specifically, the reason for limiting the content of each component in the grain-oriented electrical steel sheet is as follows.

### Silicon (Si): 2.5 to 4.5 wt%

Si plays a role of increasing the specific resistivity of the steel to reduce the core loss, but when the content of Si is less than 2.5 wt%, the specific resistivity of the steel is reduced to deteriorate the core loss, and the presence of a phase transformation section during high temperature annealing results in unstable secondary recrystallization, which is undesirable. When the content of Si is above 4.5 wt%, brittleness is increased, thus hindering cold rolling. Accordingly, the content of Si in the grain-oriented electrical steel sheet is limited to 2.5 to 4.5 wt%.

### Antimony (Sb): 0.01 to 0.08 wt%

Sb is an element that promotes the generation of Goss grains in the {110}<001> orientation, but when the Sb content is less than 0.01 wt%, a sufficient effect as a Goss crystal generation promoter cannot be expected, and when the Sb content is above 0.08 wt%, segregation occurs on the surface, thus suppressing the simultaneous decarburization and nitridation reaction and resulting in non-uniform primary grain size. Accordingly, the Sb content in the grain-oriented electrical steel sheet is limited to 0.02 to 0.08 wt%.

### Tin (Sn): 0.02 to 0.08 wt%

Sn is an element that promotes the generation of Goss grains in the {110}<001> orientation, but when the Sn content is less than 0.02 wt%, a sufficient effect as a Goss crystal generation promoter can not be expected, and when the Sn content is above 0.08 wt%, segregation occurs on the surface, thus suppressing the simultaneous decarburization and nitridation reaction and resulting in non-uniform primary grain size. Accordingly, the Sn content in the grain-oriented electrical steel sheet is limited to 0.02 to 0.08 wt%.

### Bismuth (Bi): 0.01 to 0.04 wt%

Bi is a grain boundary segregation element and is an element that interferes with the migration of the grain boundaries. Accordingly, Bi is an important element for reinforcing grain growth inhibition since it acts as a grain growth inhibitor to promote generation of the Goss grains in the {110}<001> orientation and aids in the efficient development of the secondary recrystallization. If the content of Bi is less than 0.01 wt%, the effect is deteriorated, and if the content of Bi is above 0.04 wt%, the grain boundary segregation occurs severely, which will increase the brittleness of the steel sheet and result in the fracture during rolling. Accordingly, the content of Bi in the grain-oriented electrical steel sheet is limited to 0.01 to 0.04 wt%.

### Chromium (Cr): 0.01 to 0.30 wt%

Cr is an element that promotes the generation of Goss grains in the {110}<001> orientation, but when the Cr content is less than 0.01 wt%, a sufficient effect as a Goss crystal generation promoter can not be expected, and when the Cr content is above 0.30 wt%, segregation occurs on the surface, thus promoting the formation of an oxide layer and causing surface defects. Accordingly, the Cr content in the grain-oriented electrical steel sheet is limited to 0.01 to 0.30 wt%.

### Acid soluble aluminum (Al): 0.02 to 0.04 wt%

Al is an element that has a final form of nitride such as AIN, (Al, Si)N, (Al, Si, Mn)N and that acts as a suppressor. But when the Al content is 0.02 % or less, sufficient effect as a suppressor can not be expected, and when the Al content is too high, too coarse nitride of the Al system will precipitate and grow, resulting in insufficient suppressing effect. Therefore, the content of acid soluble Al in the grain-oriented electrical steel sheet is limited to 0.02 to 0.04 wt%.

### Manganese (Mn): 0.05 to 0.20 wt%

Likewise Si, Mn has the effect of reducing the core loss by increasing the specific resistivity and it acts as an important element for the secondary recrystallization since Mn, along with Si, forms the precipitates (Al, Si, Mn)N by reacting with nitrogen introduced by the nitriding treatment, thus suppressing the growth of primary recrystallization and causing secondary recrystallization. However, when 0.20 wt% or more of Mn is added, this will promote the austenite phase transformation during hot rolling, which reduces the size of primary recrystallization and resulting in unstable secondary recrystallization. Therefore, the Mn content is limited to 0.20 wt% or less. Further, it is necessary to include Mn in an amount of 0.05 wt% or more, since Mn is an austenite-forming element that increases the austenite fraction during hot-rolling reheating, thus increasing the solid solution amount of the precipitates and providing an effect that the primary recrystallization is kept from being unnecessarily increased in size during re-precipitation through precipitate refinement and MnS formation. Accordingly, the Mn content in the grain-oriented electrical steel sheet is limited to 0.05 to 0.20 wt%.

### Carbon (C): 0.02 to 0.08 wt%

C is a component that does not greatly contribute to the improvement of the magnetic properties of the grain-oriented electrical steel sheet, so it is desirable to remove it as much as possible. However, the presence of more than a certain level of C during the rolling process promotes the austenite transformation of the steel, thereby refining the hot rolling structure and assisting formation of a uniform microstructure during hot rolling. Therefore, C is preferably included in an amount of 0.02 wt% or more in the grain-oriented electrical steel sheet. However, the presence of excessive C content can cause production of coarse carbide which is difficult to remove during decarburization. Accordingly, C content is limited to 0.08 wt% or less.

### Sulfur (S): 0.001 to 0.005 wt%

When S is contained in an amount of 0.005 % or more, it is re-solved to precipitate minutely during heating of a hot rolling slab,
resulting in decreased size of the primary recrystallization, which will lower the initiation temperature of the secondary recrystallization and thus deteriorate the magnetic properties. Further, since it takes a long time to remove S in the solid solution state in the secondary crack section of the final annealing process, the productivity of grain-oriented electrical steel sheets is reduced. Meanwhile, when the S content is 0.005% or lower, this will provide an effect that the initial grain size before cold rolling becomes coarse, so that the number of the grains of {110} <001> orientation nucleated in the magnetostriction band of the first recrystallization process is increased. Therefore, since the size of the secondary recrystallization grains is reduced to improve the magnetization of the final product, S is set to 0.005 % or less. Further, since S forms MnS, which somewhat affects the primary recrystallization grain size, it is preferable that 0.001 wt% or more of S is included. Accordingly, the S content in the grain-oriented electrical steel sheet is limited to 0.001 to 0.005 wt%.

### Nitrogen (N): 10 to 50 ppm

N is an element that reacts with Al and refines the grains. When these elements are appropriately distributed, it may be helpful to ensure adequate primary recrystallized grain size after cold rolling by appropriately refining the structure as described above. However, excessive contents of these elements will result in excessively refined primary recrystallization grains, in which case the fine grains increases the driving force of causing the grain growth during the secondary recrystallization, resulting in the growth of even the grains of undesirable orientation. Further, when there is an excessive content of N included, removal of the N content itself takes a long time in the final annealing process, which is not preferable. Accordingly, since the upper limit of the nitrogen content is set to 50 ppm, but the content of nitrogen to be solved during reheating of the slab needs to be 10 ppm or more, the lower limit of the nitrogen content is limited to 10 ppm.

### Grain-oriented electrical steel sheet having an insulation coating formed thereon

In yet another embodiment of the present invention, a grain-oriented electrical steel sheet having an insulation coating formed thereon is provided, which includes a grain-oriented electrical steel sheet and an insulation coating positioned on the surface of the grain-oriented electrical steel sheet, in which the grain-oriented electrical steel sheet contains 2.5 to 4.5 wt% of silicon (Si) and 0.01 to 0.08 wt% of antimony (Sb), and includes 0.02 to 0.08 wt% of tin (Sn), 0.01 to 0.04 wt% of bismuth (Bi), 0.01 to 0.30 wt% of chromium (Cr), 0.02 to 0.04 wt% of acid soluble aluminum (Al), 0.05 to 0.20 wt% of manganese (Mn), 0.02 to 0.08 wt% of carbon (C), and 0.001 to 0.005 wt% of sulfur (S), and includes 10 to 50 ppm of nitrogen (N), and the remainder being Fe and other inevitable impurities, and in which the insulation coating includes 0.1 to 10 wt% of an inorganic nitride, 30 to 60 wt% of silica, and 30 to 60 wt% of a metal phosphate.

This corresponds to a grain-oriented electrical steel sheet which not only reduces the noise effectively by the insulation coating, but also provides excellent coating tension, adhesion, corrosion resistance, and gloss.

Since the insulation coating has been described in detail above, further redundant description thereof will be omitted.

Meanwhile, the thickness of the insulation coating may be 0.2 to 4µm. The insulation coating in a thickness less than 0.2 *µ*m has a poor insulation and it is thus difficult to fabricate a transformer with the same, and the insulation coating in a thickness above 4 *µ*m deteriorates the transformer space factor which will then deteriorate transformer efficiency.

### [Mode for Invention]

Hereinafter, the present invention will be described with reference to some examples and evaluation examples. However, the examples are described herein to illustrate certain preferred embodiments of the present invention, and the present invention is not limited thereto.

### Example 1

### (1) Preparation of insulation coating composition for a grain-oriented electrical steel sheet

Insulation coating compositions for a grain-oriented electrical steel sheet satisfying the compositions of Inventive Examples 1 to 18 of Table 1 below were prepared, respectively.

Specifically, Inventive Examples 1 to 18 of Table 1 below were obtained by using a magnesium phosphate (Mg₃(PO₄)₂) for the metal phosphate, by mixing the magnesium phosphate with colloidal silica (average particle diameter: 7 *µ*m) at a weight ratio of 1:1 (in an order of magnesium phosphate: colloidal silica) and then adding each of the inorganic nitrides and stirring at room temperature.

### (2) Formation of insulation coating for a grain-oriented electrical steel sheet

An insulation coating was formed on the surface of the grain-oriented electrical steel sheet, using the insulation coating compositions for a grain-oriented electrical steel sheet of the Example 1.

Specifically, in order to form the insulation coating, the insulation coating compositions for a directional electric steel sheet of Example 1 were coated to 4.5g/m² onto a surface of one side of the grain-oriented electrical steel sheet and then heat-treated at a temperature of 860 °C for 55 seconds, respectively, in which the grain-oriented electrical steel sheet includes 3.4 wt% of silicon (Si), 0.05 wt% of antimony (Sb), 0.06 wt% of tin (Sn), 0.02 wt% of bismuth (Bi), 0.10 wt% of chromium (Cr), 0.03 wt% of acid soluble aluminum (Al), 0.07 wt% of manganese (Mn), 0.05 wt% of carbon (C), 0.02 wt% of sulfur (S), and 30 ppm of nitrogen (N), with the remainder being Fe and other impurities.

Thus, a grain-oriented electrical steel sheet having each of the insulation coatings formed thereon was obtained.

Meanwhile, the grain-oriented electrical steel sheet is a steel sheet (thickness: 0.27 mm, width: 300 mm, length: 60 mm, respectively) that has been finished with the final annealing through the process described below.
- A steel slab of the same composition as the grain-oriented electrical steel sheet was heated at 1150 □ for 220 minutes and then hot rolled to a thickness of 2.3 mm to prepare a hot rolled plate.
- The hot rolled plate was heated up to 1120 □, and then the temperature was maintained at 930 □ for 80 seconds, after which the hot-rolled sheet was quenched in water and pickled, followed by cold rolling to a thickness of 0.23 mm to prepare a cold rolled plate.
- The cold-rolled sheet was placed in a furnace maintained at 880 □, and dew-point temperature and oxidizing ability were controlled, after which simultaneous decarburization deposition and primary recrystallization annealing were simultaneously performed in a mixed gas atmosphere of hydrogen, nitrogen, and ammonia, to prepare a decarburized annealed steel sheet.
- Then, slurry was prepared by mixing distilled water with an annealing separator comprising MgO as a main component, and the slurry was coated onto the decarburized annealed steel sheet using a roll, and subjected to final annealing.
- The primary cracking temperature was 700 °C during the final annealing, the secondary cracking temperature was 1200 □, and the rate of temperature rising was 15 °C/hr. Further, the mixed gas atmosphere of 25 vol% of nitrogen and 75 vol% of hydrogen was heated up to 1200 □, and after reaching 1200 □, kept in a 100 vol% hydrogen gas atmosphere for 15 hours and then furnace cooled.
- experimental example

### Experimental Example of Example 1: Evaluation of adhesion, magnetic properties and noise characteristic

For Example 1, adhesion, magnetic properties and noise characteristic were evaluated according to the types and contents of inorganic nitrides, respectively. For comparison, for each composition of Comparative Examples 1 to 3 of Table 1 below, grain-oriented electrical steel sheets were prepared, respectively in the same manner as the Example 1, and adhesion, magnetic properties and noise characteristic were evaluated, with the results also shown in Table 1.

Specifically, the respective evaluation conditions are as follows.
- Adhesion: The bending test evaluates the minimum arc diameter without peeling by bending the coated steel sheet against a 5 to 100 mmϕ arc.
- Magnetic properties: In general, magnetic properties of electrical steel sheets use W17/50 and B8 as representative values, which are also evaluated in Table 1 below.

Specifically, W17/50 is a value obtained by measuring the power loss when magnetizing a magnetic field of frequency 50 Hz to 1.7 tesla by AC. In this case, 'tesla' is the unit of flux density, which means the flux per unit area.

Further, B8 is a value obtained by measuring the flux density flowing an electrical steel sheet when a current of 800 A/m was flowed through a winding wound around an electrical steel sheet.
- Noise characteristic: In general, the noise characteristic is evaluated as noise [dBA] of the audible band by acquiring the sound pressure (air pressure) in the time domain according to the international regulation IEC 61672-1, then converting it into frequency response data, and then reflecting the responsiveness (A-weighted decibels) of the audible band.

Meanwhile, the noise evaluation method selected in the present embodiment of the present invention was conducted in the same manner as the international standard IEC 61672-1, while the noise was evaluated by acquiring the shaking (vibration) data of the electrical steel sheet instead of the sound pressure and then converting it to the noise conversion value [dBA]. Specifically, the vibration of an electrical steel sheet was obtained by measuring vibration pattern over time in a non-contact method using a laser Doppler method, while a magnetic field of frequency 50 Hz was magnetized to 1.7 tesla by AC.

**(Table 1)**

| Item | Insulation coating composition for a grain-oriented electrical steel sheet (with reference to 100 wt% of total weight of insulation coating) | | | Porosity (with reference to 100 vol% of total volume of insulation coating) | Adhesion (mm Φ) | Magnetic | | Noise (dB A) |
|---|---|---|---|---|---|---|---|---|
| | | | | | | properties | | |
| | | | | | | W17/50 (W/kg ) | B8 (T) | |
| | Inorganic nitride | Colloidal silica | Magnesium phosphate | | | | | |
| Comp. Ex. 1 | - | 50 wt% | 50 wt% | 0 | 20 | 0.88 | 1.9 | 59 |
| Comp. Ex. 2 | Mg₃N₂ (0.03 wt%) | 49.98 5 wt% | 49.985 wt% | 0.04 | 20 | 0.89 | 1.9 | 59 |
| Comp. Ex. 3 | Mg₃N₂ 11 | 44.5 wt% | 44.5 wt% | 10.2 | 50 | 0.97 | 1.88 | - |
| Invent. Ex. 1 | Mg₃N₂ (3wt%) | 48.5 wt% | 48.5 wt% | 1.8 | 15 | 0.84 | 1.91 | 52 |
| Invent. Ex. 2 | Si₃N₄ (6wt%) | 47 wt% | 47 wt% | 5 | 25 | 0.82 | 1.9 | 47 |
| Invent. Ex. 3 | AlN (2wt%) | 49 wt% | 49 wt% | 0.7 | 20 | 0.87 | 1.91 | 57 |
| Invent. Ex. 4 | TiN (1wt%) | 49.5 wt% | 49.5 wt% | 0.3 | 20 | 0.85 | 1.91 | 57 |
| Invent. Ex. 5 | BN (0.5wt %) | 49.75 wt% | 49.75 wt% | 0.15 | 20 | 0.85 | 1.9 | 58 |
| Invent. Ex. 6 | TaN (0.5wt %) | 49.75 wt% | 49.75 wt% | 0.22 | 20 | 0.86 | 1.9 | 58 |
| Invent. Ex. 7 | GaN (0.7wt %) | 49.65 wt% | 49.65 wt% | 0.18 | 20 | 0.87 | 1.9 | 57 |
| Invent. Ex. 8 | Ca₃N₃ (1.5wt %) | 49.25 wt% | 49.25 wt% | 1.3 | 30 | 0.8 | 1.92 | 57 |
| Invent. Ex. 9 | InN (4wt%) | 48 wt% | 48 wt% | 6.4 | 20 | 0.86 | 1.92 | 55 |
| Invent. Ex. 10 | ZrN (5wt%) | 47.5 wt% | 47.5 wt% | 4.7 | 20 | 0.91 | 1.92 | 55 |
| Invent. Ex. 11 | Ge₃N₄ (3wt%) | 48.5 wt% | 48.5 wt% | 3.8 | 20 | 0.87 | 1.9 | 56 |
| Invent. Ex. 12 | NbN (10wt% ) | 45 wt% | 45 wt% | 9.8 | 35 | 0.95 | 1.89 | - |
| Invent. Ex. 13 | Sr₃N₂ (8wt%) | 46 wt% | 46 wt% | 9.3 | 15 | 0.88 | 1.89 | 53 |
| Invent. Ex. 14 | Ba₃N₂ (7wt%) | 46.5 wt% | 46.5 wt% | 8.4 | 25 | 0.85 | 1.9 | 53 |
| Invent. Ex. 15 | Mg3N2 (2wt%), Sr₃N₂ (2wt%) | 48 wt% | 48 wt% | 5.1 | 15 | 0.75 | 1.93 | 49 |
| Invent. Ex. 16 | Sr₃N₂ (3wt%), AIN (0.7wt %) | 48.15 wt% | 48.15 wt% | 4.1 | 15 | 0.85 | 1.91 | 53 |
| Invent. Ex. 17 | Sr₃N₂ (3wt%), AIN (0.7wt%), Si₃N₄ (2.3wt%) | 47 wt% | 47 wt% | 3.9 | 20 | 0.82 | 1.91 | 53 |
| Invent. Ex. 18 | Mg₃N₂ (3wt%), BN (0.5wt %), InN (0.5wt %), Sr₃N₂ (2wt%) | 47 wt% | 47 wt% | 7.4 | 25 | 0.78 | 1.91 | 51 |

Referring to Table 1 above, it can be seen that Inventive Examples 1 to 18 were superior to Comparative Example 1 in terms of the noise characteristics, which is attributable to the use of the composition for a grain-oriented electrical steel sheet including the inorganic nitride unlike Comparative Example 1.

Specifically, it can be seen that in Inventive Examples 1 to 18, the nitride of at least one element selected from the group consisting of magnesium (Mg), silicon (Si), aluminum (Al), titanium (Ti), boron (B), tantalum (Ta), gallium (Ga), calcium (Ca), indium (In), zirconium (Zr), germanium (Ge), niobium (Nb), strontium (Sr₂), and barium (Ba) was decomposed by heat treatment, forming fine pores within the insulation coating.

The porosity was 0.05 to 10 vol% based on total volume 100 vol% of the insulation coating, and it can be seen that it effectively suppressed the vibration amplification by converting the magnetostrictive energy into thermal energy, thus resulting in improved noise of the grain-oriented electrical steel sheet.

Meanwhile, Comparative Examples 2 and 3 used Mg₃N₂, which is the same inorganic nitride as that in Inventive Example 1, but showed inferior noise characteristic than that of Inventive Example 1. From this, it is considered necessary to prepare an insulation coating composition for a grain-oriented electrical steel sheets in which the inorganic nitride content is appropriately controlled, to improve the noise characteristics of the grain-oriented electrical steel sheets.

### Example 2

### (1) Preparation of insulation coating composition for a grain-oriented electrical steel sheet

Insulation coating compositions for a grain-oriented electrical steel sheet satisfying the compositions of Inventive Examples A1 to A7 of Table 2 below were prepared, respectively.

Specifically, Inventive Examples A1 to A7 of Table 2 below were prepared using a metal phosphate in which aluminum phosphate and magnesium phosphate are mixed in a weight ratio of 1:1 (in an order of aluminum phosphate: magnesium phosphate), by adding colloidal silica (average particle diameter: 20 nm) and each of the inorganic nitrides to the metal phosphate and stirring at room temperature.

### (2) Formation of insulation coating for a grain-oriented electrical steel sheet

An insulation coating was formed on the surface of the grain-oriented electrical steel sheet, using the insulation coating compositions for a grain-oriented electrical steel sheet of the Example 2.

Specifically, in order to form the insulation coating, the insulation coating compositions for a directional electric steel sheet of Example 2 were coated to 3.5g/m² onto a surface of one side of the grain-oriented electrical steel sheet and then heat-treated at a temperature of 840 °C for 65 seconds, respectively, in which the grain-oriented electrical steel sheet includes 3.2 wt% of silicon (Si), 0.04 wt% of antimony (Sb), 0.07 wt% of tin (Sn), 0.03 wt% of bismuth (Bi), 0.15 wt% of chromium (Cr), 0.02 wt% of acid soluble aluminum (Al), 0.9 wt% of manganese (Mn), 0.06 wt% of carbon (C), 0.02 wt% of sulfur (S), and 30 ppm of nitrogen (N), with the remainder being Fe and other impurities.

Thus, a grain-oriented electrical steel sheet having each of the insulation coatings formed thereon was obtained.

Meanwhile, the grain-oriented electrical steel sheet is a steel sheet (thickness: 0.27 mm, width: 60 mm, length: 300 mm, respectively) that has been finished with the final annealing through the process described below.
- A steel slab of the same composition as the grain-oriented electrical steel sheet was heated at 1250 °C for 105 minutes and then hot rolled to a thickness of 2.6 mm to prepare a hot rolled plate.
- The hot rolled plate was heated up to 1100 □, and then the temperature was maintained at 920 □ for 80 seconds, after which the hot-rolled plate was quenched in water and pickled, followed by cold rolling to a thickness of 0.27 mm to prepare a cold rolled plate.
- The cold-rolled plate was placed in a furnace maintained at 875 □, and dew-point temperature and oxidizing ability were controlled, after which simultaneous decarburization deposition and primary recrystallization annealing were simultaneously performed in a mixed gas atmosphere of hydrogen, nitrogen, and ammonia, to prepare a decarburized annealed steel sheet.
- Then, slurry was prepared by mixing distilled water with an annealing separator comprising MgO as a main component, and the slurry was coated onto the decarburized annealed steel sheet using a roll, and subjected to final annealing.
- The primary cracking temperature was 740 °C during the final annealing, the secondary cracking temperature was 1200 □, and the rate of temperature rising was 25 °C/hr. Further, the mixed gas atmosphere of 50 vol% of nitrogen and 50 vol% of hydrogen was heated up to 1200 □, and after reaching 1200 □, kept in hydrogen gas atmosphere for 8 hours and then furnace cooled.

### Experimental Example of Example 2: Evaluation of surface quality, insulation and noise characteristics

For Example 2, the surface quality, the insulation and the noise characteristics according to the inorganic nitride contents were evaluated, respectively. For comparison, for each composition of Comparative Examples A0, A1 to A5 of Table 2 below, grain-oriented electrical steel sheets were prepared in the same manner as the Example 2, respectively, and evaluated for the surface quality, insulation and noise characteristics, respectively. The results of the evaluation are also shown in Table 2.

Specifically, the respective evaluation conditions are as follows.
- Surface quality: A grain-oriented electrical steel sheet having each insulation coating formed thereon was placed in a sodium chloride (NaCl) solution (5 wt% of sodium chloride based on a total weight of 100 wt%) at 35 □, and after having been left for 8 hours, the occurrence of rust was evaluated.

Specifically, with reference to an area (100 area%) of a surface of one side of the grain-oriented electrical steel sheet having each insulation coating formed thereon, 5 % or less area of rust was indicated "Excellent", 20 or less area of rust was indicated "Good", 20 to 50 area% of rust was indicated "slightly bad", and 50 area % or more of rust was indicated "poor".
- Insulation property: According to the ASTM A717 international standard, the insulation property of the upper portion of the insulation coating was measured using a Franklin measuring instrument.
- Noise characteristics: Evaluation was conducted in the same manner as in the Experimental Example for Example 1 described above.

**(Table 2)**

| Item | Insulation coating composition for a grain-oriented electrical steel sheet (with reference to 100 wt% of total weight of insulation coating) | | | Porosity (with referenc e to 100 vol% of total volume of insulation coating) | Surface quality | Insulation (mA ) | Noise (dBA) |
|---|---|---|---|---|---|---|---|
| | Mg3N2 | Colloidal silica | Metal phosphate (Mixed at a weight ratio of 1:1 (aluminum phosphate: magnesium phosphate)) | | | | |
| Comp. Ex. A0 | - | 50 wt% | 50 wt% | 0 | □ | 360 | 66.4 |
| Invent. Ex. A1 | 3.5 wt% | 42 wt% | 55.5 wt% | 1.4 | □ | 25 | 62.2 |
| Invent. Ex. A2 | 10 wt% | 40 wt% | 50 wt% | 9.2 | □ | 145 | 57.5 |
| Invent. Ex. A3 | 5.2 wt% | 47.3 wt% | 47.5 wt% | 3.7 | ○ | 224 | 54.4 |
| Invent. Ex. A4 | 6.4 wt% | 55.2 wt% | 38.4 wt% | 4.1 | □ | 415 | 58.5 |
| Invent. Ex. A5 | 0.1 wt% | 45.9 wt% | 54 wt% | 0.05 | ○ | 375 | 66.2 |
| Invent. Ex. A6 | 0.5 wt% | 49.5 wt% | 50 wt% | 0.1 | ○ | 225 | 66.2 |
| Invent. Ex. A7 | 8.5 wt% | 35.8 wt% | 55.7 wt% | 8.9 | ○ | 97 | 55.5 |
| Comp. Ex. A1 | 0.05 wt% | 34.95 wt% | 65 wt% | 0.01 | □ | 310 | 68.4 |
| Comp. Ex. A2 | 11 wt% | 72 wt% | 17 wt% | 14 | X | - | - |
| Comp. Ex. A3 | 5 wt% | 62 wt% | 33 wt% | 7.1 | □ | 550 | 72.7 |
| Comp. Ex. A4 | 5 wt% | 5 wt% | 90 wt% | 7.9 | X | - | - |
| Comp. Ex. A5 | 7 wt% | 84 wt% | 9 wt% | 8.0 | X | - | - |

Referring to Table 2, it can be seen that the surface quality of Inventive
Examples A1 to A7 were substantially superior to that of Comparative Example A0, and that the insulation and noise characteristic were greatly improved. It can be seen that this was due to the use of the composition for grain-oriented electrical steel sheets including an inorganic nitride, that is, magnesium nitride (Mg₃N₂), unlike Comparative Example A0.

Specifically, as shown in Experimental Example of Example 1 above, the magnesium nitride of Inventive Examples A1 to A7 was decomposed by heat treatment to form fine pores, but in order to effectively improve the noise characteristics, it is considered necessary to appropriately control the content of the insulation coating composition for a grain-oriented electrical steel sheet.

That is, when comparing Comparative Examples A1 and A2 with Inventive Examples A1 to A7, it can be evaluated that it is appropriate to include 0.1 to 10 wt% of an inorganic nitride in an insulation coating composition for a grain-oriented electrical steel sheets.

More specifically, in a case of Comparative Example A1 where the content of inorganic nitride in the insulation coating composition for a grain-oriented electrical steel sheet is less than the range mentioned above, the porosity in the insulation coating is deteriorated, while in a case of Comparative Example A2 where the content of inorganic nitride is above the range, it is considered that there is a problem of increased porosity due to the excess gas generated in the heat treatment process, and deteriorated surface quality and insulation of the insulation coating.

Furthermore, when comparing Comparative Examples A1 to A5 with Inventive Examples A1 to A7, even when 0.1 to 10 wt% of an inorganic nitride is included in the insulation coating composition for a grain-oriented electrical steel sheet, it can be evaluated that it is appropriate that the colloidal silica is included in an amount of 30 to 60 wt%, and metal phosphate is included in an amount of 30 to 60 wt%.

More specifically, it is considered that, in the case of Comparative Examples A2, A3 and A5 where the content of colloidal silica in the insulation coating composition for a grain-oriented electrical steel sheets is above 60 wt%, there is a problem that the adhesion is deteriorated, and in the case of Comparative Example A4 where the content of colloidal silica is less than 30 wt%, there is a problem that the insulation is deteriorated.

In addition, it is considered that in the case of Comparative Examples A1 and A4 where the content of metal phosphate in the insulation coating composition for a grain-oriented electrical steel sheet is above 60 wt%, there is a problem that the insulation is deteriorated, and in the case of Comparative Examples A2 and A5 where the content of metal phosphate is less than 30 wt%, there is a problem that the adhesion is deteriorated.

Considering these results, it is considered that an appropriate insulation coating composition for a grain-oriented electrical steel sheet includes 0.1 to 10 wt% of an inorganic nitride; 30 to 60 wt% of colloidal silica; and 30 to 60 wt% of a metal phosphate, and by using this, a grain-oriented electrical steel sheet having the insulation coating formed thereon can exhibit not only excellent noise characteristics, but also superior adhesion and insulation.

### Experimental Example: Evaluation of transformer space factor and noise characteristic of 250 kVA transformer

An insulation coating was formed on the surface of the grain-oriented electrical steel sheet using the composition of Inventive Example A3 made in Example 2. After laser refining the magnetic domains on the grain-oriented electrical steel sheet having the insulation coating formed thereon, a 250 kVA transformer was fabricated. For comparison, a separate 250 kVA transformer was also fabricated according to Comparative Example A0.

For these 250 kVA transformers, the results of evaluating magnetic properties and noise characteristic in the condition of 50 Hz according to the design flux density were recorded in FIG. 1 and Table 3.

In order to prepare a grain-oriented electrical steel sheet having each of insulation coatings formed thereon, the insulation coating composition for a directional electric steel sheet of Inventive Example A3 or Comparative Example A0 was coated to 3.5g/m² on a surface of one side of a grain-oriented electrical steel sheet and then heat-treated at a temperature of 840 °C for 65 seconds, respectively, in which grain-oriented electrical steel sheet includes 3.4 wt% of silicon (Si), 0.02 wt% of antimony (Sb), 0.06 wt% of tin (Sn), 0.03 wt% of bismuth (Bi), 0.17 wt% of chromium (Cr), 0.03 wt% of acid soluble aluminum (Al), 0.11 wt% of manganese (Mn), 0.06 wt% of carbon (C), and 0.002 wt% of sulfur (S), contains 32 ppm of nitrogen (N), with the remainder being Fe and other impurities.

Thus, a grain-oriented electrical steel sheet having each of the insulation coatings formed thereon was obtained.

Meanwhile, the grain-oriented electrical steel sheet is a steel sheet (thickness: 0.27 mm, width: 300 mm, length: 60 mm, respectively) that has been finished with the final annealing through the process described below.
- A steel slab of the same composition as the grain-oriented electrical steel sheet was heated at 1230 °C for 120 minutes and then hot rolled to a thickness of 2.5 mm to prepare a hot rolled plate.
- The hot rolled plate was heated up to 1120 □, and then the temperature was maintained at 950 □ for 80 seconds, after which the hot-rolled sheet was quenched in water and pickled, followed by cold rolling to a thickness of 0.27 mm to prepare a cold rolled plate.
- The cold-rolled sheet was placed in a furnace maintained at 865 □, and dew-point temperature and oxidizing ability were controlled, after which simultaneous decarburization deposition and primary recrystallization annealing were simultaneously performed in a mixed gas atmosphere of hydrogen, nitrogen, and ammonia, to prepare a decarburized annealed steel sheet.
- Then, slurry was prepared by mixing distilled water with an annealing separator comprising MgO as a main component, and the slurry was coated onto the decarburized annealed steel sheet using a roll, and subjected to final annealing.
- The primary cracking temperature was 700 °C during the final annealing, the secondary cracking temperature was 1200 □, and the rate of temperature rising was 50 °C/hr. Further, the mixed gas atmosphere of 25 vol% of nitrogen and 75 vol% of hydrogen was heated up to 1200 □, and after reaching 1200 □, kept in hydrogen gas atmosphere for 14 hours and then furnace cooled.

**(Table 3)**

| Item | Magnetic properties | | Noise (50Hz, dBA) | | | | | | |
|---|---|---|---|---|---|---|---|---|---|
| | W17/50(W/kg) | B8(T) | 1.3T | 1.4T | 1.5T | 1.6T | 1.7T | 1.8T | 1.9 T |
| Com p. Ex. A0 | 0.75 | 1.92 | 39.9 | 43.8 | 47 | 50.1 | 53.2 | 58.5 | 61.9 |
| Inven t. Ex. A3 | 0.74 | 1.92 | 28.1 | 34.6 | 37.6 | 42.8 | 49.3 | 55.2 | 58.2 |

According to FIG. 1 and Table 3, it can be seen that the noise characteristic of the Inventive Example A3 were better than that of the comparative example A0 when a 250 kVA transformer was actually fabricated.

It will be understood that the present invention is not limited to the above embodiments but may be embodied in many different forms from each other and those of ordinary skill in the art to which the present invention pertains can implement the invention in other specific forms without changing the technical idea or essential features of the present invention. Accordingly, it will be understood that the exemplary embodiments described above are only illustrative, and should not be construed as limiting.

## Claims

1. An insulation coating composition for a grain-oriented electrical steel sheet, comprising:
0.1 to 10 wt% of an inorganic nitride;
30 to 60 wt% of colloidal silica; and
30 to 60 wt% of a metal phosphate.

2. The insulation coating composition for a grain-oriented electrical steel sheet of claim 1,
wherein the inorganic nitride comprises a nitride of at least one element selected from the group consisting of
magnesium (Mg), silicon (Si), aluminum (Al), titanium (Ti), boron (B), tantalum (Ta), gallium (Ga), calcium (Ca), indium (In), zirconium (Zr), germanium (Ge), niobium (Nb), strontium (Sr₂), and barium (Ba).

3. The insulation coating composition for a grain-oriented electrical steel sheet of claim 1,
wherein a particle diameter of the colloidal silica is
2 to 100 nm.

4. The insulation coating composition for a grain-oriented electrical steel sheet of claim 1,
wherein the metal phosphate comprises
a metal phosphate of at least one element selected from the group consisting of aluminum (Al), magnesium (Mg), calcium (Ca), antimony (Sb), tin (Sn), lead (Pb), and bismuth (Bi).

5. The insulation coating composition for a grain-oriented electrical steel sheet of claim 1,
wherein the insulation coating composition further comprises 0.1 to 7 wt% of a chromium oxide based on 100 wt% of the composition that includes 0.1 to 10 wt% of an inorganic nitride; 30 to 60 wt% of colloidal silica; and 30 to 60 wt% of a metal phosphate.

6. The insulation coating composition for a grain-oriented electrical steel sheet of claim 1,
further comprising 0.1 to 4 wt% of a boric acid based on 100 wt% of the composition that includes 0.1 to 10 wt% of an inorganic nitride; 30 to 60 wt% of colloidal silica; and 30 to 60 wt% of a metal phosphate.

7. A method for forming an insulation coating for a grain-oriented electrical steel sheet, comprising steps of:
preparing an insulation coating composition for a grain-oriented electrical steel sheet;
coating the insulation coating composition for a grain-oriented electrical steel sheet on a surface of the grain-oriented electrical steel sheet, and
heat treating the grain-oriented electrical steel sheet having the insulation coating composition for a grain-oriented electrical steel sheet coated thereon,
wherein the grain-oriented electrical steel sheet comprises 2.5 to 4.5 wt% of silicon (Si), 0.01 to 0.08 wt% of antimony (Sb), and includes 0.02 to 0.08 wt% of tin (Sn), 0.01 to 0.04 wt% of bismuth (Bi), 0.01 to 0.30 wt% of chromium (Cr), 0.02 to 0.04 wt% of acid soluble aluminum (Al), 0.05 to 0.20 wt% of manganese (Mn), 0.02 to 0.08 wt% of carbon (C), and 0.001 to 0.005 wt% of sulfur (S), and comprises 10 to 50 ppm of nitrogen (N), with the remainder being Fe and other inevitable impurities,
and the insulation coating composition for a grain-oriented electrical steel sheet comprises 0.1 to 10 wt% of an inorganic nitride, 30 to 60 wt% of colloidal silica, and 30 to 60 wt% of a metal phosphate.

8. The method for forming an insulation coating for a grain-oriented electrical steel sheet of claim 7,
wherein the step of heat treating the grain-oriented electrical steel sheet having the insulation coating composition for a grain-oriented electrical steel sheet coated thereon comprises
a step of converting the inorganic nitride in the insulation coating composition for a grain-oriented electrical steel sheet into an inorganic oxide or a hydroxide.

9. The method for forming an insulation coating for a grain-oriented electrical steel sheet of claim 8,
wherein the step of converting the inorganic nitride in the insulation coating composition for a grain-oriented electrical steel sheet into an inorganic oxide or a hydroxide comprises
generating ammonia (NH₃), nitrogen (N₂) and/or hydrogen (H₂) gas

10. The method for forming an insulation coating for a grain-oriented electrical steel sheet of claim 9,
wherein the step of converting the inorganic nitride in the insulation coating composition for a grain-oriented electrical steel sheet into an inorganic oxide or a hydroxide comprises
forming the insulation coating including pores formed therein by the ammonia (NH₃), nitrogen (N₂) and/or hydrogen (H₂) gas.

11. The method for forming an insulation coating for a grain-oriented electrical steel sheet of claim 10,
wherein the step of converting the inorganic nitride in the insulation coating composition for a grain-oriented electrical steel sheet into an inorganic oxide or a hydroxide comprises
including 0.05 to 10 vol% of the pores based on the total volume (100 vol%) of the insulation coating.

12. The method for forming an insulation coating for a grain-oriented electrical steel sheet of claim 7,
wherein the step of heat treating the grain-oriented electrical steel sheet having the insulation coating composition for a grain-oriented electrical steel sheet coated thereon
is performed in a temperature range of 250 to 950 □.

13. The method for forming an insulation coating for a grain-oriented electrical steel sheet of claim 7,
wherein the step of heat treating the grain-oriented electrical steel sheet having the insulation coating composition for a grain-oriented electrical steel sheet coated thereon
is performed for 30 to 70 seconds.

14. The method for forming an insulation coating for a grain-oriented electrical steel sheet of claim 7,
wherein the step of coating the insulation coating composition for a grain-oriented electrical steel sheet on a surface of the grain-oriented electrical steel sheet comprises:
coating the insulation coating composition for the grain-oriented electrical steel sheet in a range of 1 to 7 g/m² on a surface of each side of the grain-oriented electrical steel sheet.

15. The method for forming an insulation coating for a grain-oriented electrical steel sheet of claim 7,
wherein the inorganic nitride
comprises a nitride of at least one element selected from the group consisting of magnesium (Mg), silicon (Si), aluminum (Al), titanium (Ti), boron (B), tantalum (Ta), gallium (Ga), calcium (Ca), indium (In), zirconium (Zr), germanium (Ge), niobium (Nb), strontium (Sr₂), and barium (Ba).

16. A grain-oriented electrical steel sheet having an insulation coating formed thereon, comprising:
a grain-oriented electrical steel sheet; and
an insulation coating positioned on a surface of the grain-oriented electrical steel sheet,
wherein the grain-oriented electrical steel sheet comprises 2.5 to 4.5 wt% of silicon (Si), 0.01 to 0.08 wt% of antimony (Sb), 0.02 to 0.08 wt% of tin (Sn), 0.01 to 0.04 wt% of bismuth (Bi), 0.01 to 0.30 wt% of chromium (Cr), 0.02 to 0.04 wt% of acid soluble aluminum (Al), 0.05 to 0.20 wt% of manganese (Mn), 0.02 to 0.08 wt% of carbon (C), and 0.001 to 0.005 wt% of sulfur (S), and comprises 10 to 50 ppm of nitrogen (N), with the remainder being Fe and other inevitable impurities,
and the insulation coating comprises 0.1 to 10 wt% of an inorganic oxide, 30 to 60 wt% of silica, and 30 to 60 wt% of a metal phosphate.

17. The grain-oriented electrical steel sheet of claim 16,
wherein the insulation coating comprises a pore therein.

18. The grain-oriented electrical steel sheet of claim 17,
wherein based on the total volume (100 vol%) of the insulation coating, 0.05 to 10 vol% of the pore is included.

19. The grain-oriented electrical steel sheet of claim 18,
wherein a diameter of the pore is
1 to 500 nm.

20. The grain-oriented electrical steel sheet of claim 16,
wherein the inorganic oxide or hydroxide
comprises an oxide or a hydroxide of at least one element selected from the group consisting of magnesium (Mg), silicon (Si), aluminum (Al), titanium (Ti), boron (B), tantalum (Ta), gallium (Ga), calcium (Ca), indium (In), zirconium (Zr), germanium (Ge), niobium (Nb), strontium (Sr₂), and barium (Ba).

21. The grain-oriented electrical steel sheet of claim 16,
wherein a thickness of the insulation coating is
0.2 to 4 *µ*m.
